(19) Europäisches Patentamt
European Patent Office
Office européen des brevets

(11) EP 3 201 268 B1

# (12) EUROPEAN PATENT SPECIFICATION

(45) Date of publication and mention of the grant of the patent:
**12.12.2018 Bulletin 2018/50**

(21) Application number: **15759474.8**

(22) Date of filing: **09.09.2015**

(51) Int Cl.:
***C08L 23/12*** *(2006.01)*

(86) International application number:
**PCT/EP2015/070529**

(87) International publication number:
**WO 2016/050461 (07.04.2016 Gazette 2016/14)**

## (54) PROPYLENE-BASED COPOLYMER COMPOSITION FOR PIPES

PROPYLENBASIERTE COPOLYMERZUSAMMENSETZUNG FÜR ROHRE

COMPOSITION DE COPOLYMÈRE À BASE DE PROPYLÈNE POUR TUYAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2014 EP 14187259**

(43) Date of publication of application:
**09.08.2017 Bulletin 2017/32**

(73) Proprietor: **Basell Poliolefine Italia S.r.l.**
**20121 Milano (IT)**

(72) Inventors:
- **CAVALIERI, Claudio**
  **I-44122 Ferrara (IT)**
- **GALVAN, Monica**
  **I-44122 Ferrara (IT)**
- **PELLEGATTI, Giampaolo**
  **I-44122 Ferrara (IT)**
- **TISI, Francesca**
  **I-44122 Ferrara (IT)**

(74) Representative: **Sacco, Marco**
**Basell Poliolefine Italia S.r.l.**
**Intellectual Property**
**P.le Donegani, 12**
**44122 Ferrara (IT)**

(56) References cited:
**EP-A1- 2 505 606**
**WO-A1-2005/014713**
**WO-A1-2011/160953**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 201 268 B1

Printed by Jouve, 75001 PARIS (FR)

## Description

### FIELD OF THE INVENTION

The present disclosure relates to a composition comprising a propylene homopolymer and an heterophasic propylene ethylene copolymer particularly fit for the production of sewage pipes especially for use at low temperature.

### BACKGROUND OF THE INVENTION

Propylene ethylene copolymer are already known in the art for the production of pipes.

For example, according to international patent application WO 97/33117, one can obtain pipes of the polypropylene plastic material having high creep resistance, high longterm-pressure resistance, improved stiffness and resistance to rapid crack propagation as well. According to the said document, the catastrophic failure of a pipe of polypropylene plastic is prevented when the pipe is made of several layers of different polypropylene plastic material, wherein at least one layer consists of a broad molecular weight distribution (MWD) polypropylene that provides the high creep resistance and at least one layer consists of an elastomer-modified polypropylene that improves the impact strength. The said broad MWD polypropylene is a mixture of a very high molecular weight propylene random copolymer with 1-10 wt% of ethylene or a higher-a-olefin repeating units and of a low molecular weight propylene polymer with low (up to 1 wt%) or zero comonomer.

Especially when small diameter pipes are needed it is important to have limited wall thickness of the pipe. This allows to obtain pipes containing less material and above all to improve the efficiency of the pipe in terms of feed due to the higher internal diameter. However when the wall thickness become small the pipe could become brittle, thus it is necessary to use a material having high impact resistance, especially at low temperature. Furthermore the material to be used for pipe have to have an high flexural modulus in order to obtain rigid pipes. Usually in a polypropylene based composition when the Izod is improved the flexural modulus is lowed. The applicant found that small amount of heterophasic copolymers having certain features can be added to propylene ethylene copolymer in order to have a good impact/stiffness balance without basically compromise stiffness.

### SUMMARY OF THE INVENTION

An object of the present disclosure is a polyolefin composition comprising:

A) from 90.0 wt% to 99.0 wt%;of a propylene homopolymer having:

(i) polydispersity index ranging from 5 to 10
(ii) solubles in xylene at 25°C ranging from 4.0 wt% to 1.0 wt%;
(iii) the melt flow rate (230°C/5 kg.. ISO 1133) ranging from 0.2 g/10min to 3.5 g/10min;

B) from 1.0 wt% to 10.0 wt%; of a propylene, ethylene copolymer composition comprising:

b1) from 14 wt% to 52 wt%; of a propylene homopolymer or a propylene/ethylene copolymer having a content of ethylene derived units ranging from 0.1 wt% to 4.5 wt%; having a xylene soluble content measured at 25°C lower than 10 wt%; and a melt flow rate (230°C/2.16 kg. ISO 1133) ranging from 50 g/10min to 120 g/10min;
b2) from 48 wt% to 86 wt% of a propylene ethylene copolymer having a content of ethylene derived units ranging from 20.0 wt% to 55.0 wt%;

wherein the resulting polyolefin composition has an melt flow rate (230°C/5 kg.. ISO 1133) ranging from 0.2 g/10min to 4.0 g/10min; the sum of amounts of A+B being 100 and the sum of amounts of b1+b2 being 100.

### DETAILED DESCRIPTION OF THE INVENTION

Thus an object of the present disclosure is a polyolefin composition comprising:

A) from 90.0 wt% to 99.0 wt%; preferably from 93.0 wt% to 98.5.0 wt% more preferably from 98.5 wt% to 95.0 wt% of a propylene homopolymer having:

(i) polydispersity index ranging from 5 to 10
(ii) solubles in xylene at 25°C ranging from 4.0 wt% to 1.0 wt%; preferably from 3.0 wt% to 2.0 wt%;

(iii) the melt flow rate (230°C/5 kg.. ISO 1133) ranging from 0.2 g/10min to 3.5 g/10min; preferably from 0.6 g/10min to 2.0 g/10min;

B) from 1.0 wt% to 10.0 wt%; preferably from 1.5 wt% to 7.0 wt%; more preferably from 1.5 wt% to 5.0. wt% of a propylene, ethylene copolymer composition comprising:

b1) from 14 wt% to 52 wt%; preferably from 18 wt% to 44 wt%; more preferably from 22 wt% to 38 wt% of a propylene homopolymer or a propylene/ethylene copolymer having a content of ethylene derived units ranging from 0.1 wt% to 4.5 wt%; having a xylene soluble content measured at 25°C lower than 10 wt%; preferably lower than 8 wt% ; more preferably lower than 7 wt%; and a melt flow rate (230°C/2.16 kg. ISO 1133) ranging from 50 g/10min to 120g/10min; preferably from 72 g/10min to 115 g/10min; more preferably from 80 g/10min to 95 g/10min;
b2) from 48 wt% to 86 wt% preferably from 56 wt% to 82 wt%; more preferably from 62 wt% to 78 wt% of a propylene ethylene copolymer having a content of ethylene derived units ranging from 20.0 wt% to 55.0 wt%; preferably from 28 wt% to 45 wt%; more preferably from 32 wt% to 40 wt%;

wherein the resulting polyolefin composition has an melt flow rate (230°C/5 kg.. ISO 1133) ranging from 0.2 g/10min to 4.0 g/10min; preferably from 0.4 g/10min to 3.0 g/lOmin; more preferably from 0.5 g/10 min to 2 g/10min; the sum of amounts of A+B being 100 and the sum of amounts of b1+b2 being 100.

The term copolymer means a polymer containing only two monomers; preferably propylene and ethylene.

In the component B) component b1) is preferably a propylene homopolymer.

In the component B) component b2) is preferably a propylene ethylene copolymer having an intrinsic viscosity of the xylene soluble fraction at 25°C ranging from 1.5 dl/g to 3.9 dl/g; preferably from 2.2 dl/g to 3.2 dl/g.

With the polyolefin composition of the present disclosure it is possible to obtain pipes, in particular sewage pipes having high modulus and high impact resistance.

Thus a further object of the present disclosure is a pipe comprising the composition of the present disclosure.

The term "pipe" as used herein also includes pipe fittings, valves and all parts which are commonly necessary for e.g. a hot water piping system. Also included within the definition are single and multilayer pipes, where for example one or more of the layers is a metal layer and which may include an adhesive layer.

Such articles can be manufactured through a variety of industrial processes well known in the art, such as for instance moulding, extrusion, and the like.

In a further embodiment of the disclosure, the composition of the present disclosure further comprises an inorganic filler agent in an amount ranging from 0.5 to 60 parts by weight with respect to 100 parts by weight of the said composition. Typical examples of such filler agents are calcium carbonate, barium sulphate, titanium bioxide and talc. Talc and calcium carbonate are preferred. A number of filler agents can also have a nucleating effect, such as talc that is also a nucleating agent. The amount of a nucleating agent is typically from 0.2 to 5 wt% with respect to the polymer amount.

The composition of the disclosure is also suitable for providing pipes with walls of any configuration other than those with smooth inner and outer surface. Examples are pipes with a sandwich-like pipe wall, pipes with a hollow wall construction with longitudinally extending cavities, pipes with a hollow wall construction with spiral cavities, pipes with a smooth inner surface and a compact or hollow, spirally shaped, or an annularly ribbed outer surface, independently of the configuration of the respective pipe ends.

Articles, pressure pipes and related fittings according to the present disclosure are produced in a manner known per se, e.g. by (co-)extrusion or moulding, for instance.

Extrusion of articles can be made with different type of extruders for polyolefin, e.g. single or twin screw extruders.

A further embodiment of the present disclosure is a process wherein the said composition is moulded into said articles.

When the pipes are multi-layer, at least one layer is made of the polyolefin composition described above. The further layer(s) is/are made of an amorphous or crystalline polymer (such as homopolymer and co- or terpolymer) of R-CH=CH2 olefins, where R is a hydrogen atom or a $C_1$-$C_6$ alkyl radical. Particularly preferred are the following polymers:

isotactic or mainly isotactic propylene homopolymers;
random co- and terpolymers of propylene with ethylene and/or C4-C8 $\alpha$-olefin, such as 1-butene, 1-hexene, 1-octene, 4-methyl-1-pentene, wherein the total comonomer content ranges from 0.05% to 20% by weight, or mixture of said polymers with isotactic or mainly isotactic propylene homopolymers;
heterophasic polymer blends comprising (a) a propylene homopolymer and/or one of the co- and terpolymers of item (2), and an elastomeric moiety (b) comprising co- and terpolymers of ethylene with propylene and/or a C4-C8 $\alpha$-olefin, optionally containing minor amounts of a diene, the same disclosed for polymer (2)(a); and

amorphous polymers such as fluorinated polymers, polyvinyl difluoride (PVDF) for example.

In multi-layer pipes the layers of the pipe can have the same or different thickness.

The composition of the present disclosure can be prepared by blending the various components A), b1) and b2) or by preparing component A) and blend this component with component B) prepared in a single polymerization process by sequential polymerization steps.

The polymerization of A) and B) can be carried out in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound.

An external donor is optionally added.

The catalysts generally used in the process of the disclosure are capable of producing polypropylene with a value of xylene insolubility at ambient temperature greater than 90%, preferably greater than 95%.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids.

Particularly suitable electron-donor compounds are esters of phtalic acid and 1,3-diethers of formula:

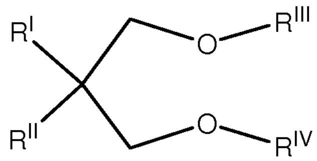

wherein RI and RII are the same or different and are C1-C18 alkyl, C3-C18 cycloalkyl or C7-C18 aryl radicals; RIII and RIV are the same or different and are C1-C4 alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The preparation of the above mentioned catalyst component is carried out according to various methods.

For example, a MgCl2•nROH adduct (in particular in the form of spheroidal particles) wherein n is generally from 1 to 3 and ROH is ethanol, butanol or isobutanol, is reacted with an excess of TiCl4 containing the electron-donor compound. The reaction temperature is generally from 80 to 120° C. The solid is then isolated and reacted once more with TiCl4, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium

compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or SO4 or SO3 groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)2Si(OCH3)2, (cyclohexyl)(methyl)Si (OCH3)2, (cyclopentyl)2Si(OCH3)2 and (phenyl)2Si(OCH3)2 and (1,1,2-trimethylpropyl)Si(OCH3)3.

1,3-diethers having the formulae described above can also be used advantageously. If the internal donor is one of these diethers, the external donors can be omitted.

In particular, even if many other combinations of the previously said catalyst components may allow to obtain compositions according to the present disclosure, the components A) and B) are preferably prepared by using catalysts containing a phthalate as internal donor and (cyclopentyl)2Si(OCH3)2 as external donor, or the said 1,3-diethers as internal donors.

A further The Ziegler-Natta catalysts that can be used to produce a propylene polymer of the present disclosure is a solid catalyst component comprising a magnesium halide, a titanium compound having at least a Ti-halogen bond as above described and at least two electron donor compounds selected from succinates and the other being selected from 1,3 diethers.

Component A) is preferably produced with a polymerization process illustrated in EP application 1 012 195.

In detail, the said process comprises feeding the monomers to said polymerisation zones in the presence of catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it become to possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be effected by means of a recycle line for the gaseous mixture.

The control of the polymer circulating between the two polymerisation zones can be effected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

Advantageously, one or more inert gases are maintained in the polymerisation zones, in such quantities that the sum of the partial pressure of the inert gases is preferably between 5 and 80% of the total pressure of the gases. The inert gas can be nitrogen or propane, for example.

The various catalysts are fed up to the riser at any point of the said riser. However, they can also be fed at any point of the downcomer. The catalyst can be in any physical state, therefore catalysts in either solid or liquid state can be used.

The following examples are given to illustrate the present disclosure without limiting purpose.

EXAMPLES

Characterization methods

Melting temperature and crystallization temperature: Determined by differential scanning calorimetry (DSC). weighting 6±1 mg, is heated to 220±1° C at a rate of 20 °C/min and kept at 220±1° C for 2 minutes in nitrogen stream and it is thereafter cooled at a rate of 20° C/min to 40±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read.

Melt Flow Rate: Determined according to the method ISO 1133 (230° C, 5 kg or 2.16 kg) .

Solubility in xylene at 25°C: Determined as follows.

2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Ethylene content of the polymers (C2 content)

Ethylene content has been determined by IR spectroscopy. The sample of a pressed film has been prepared according to ASTM D5576-00 (2013). The spectrum of a pressed film of the polymer is recorded in absorbance vs. wavenumbers (cm-1). The following measurements are used to calculate C2 content:

a) Area (At) of the combination absorption bands between 4482 and 3950 cm-1 which is used for spectrometric normalization of film thickness.
b) Area (AC2) of the absorption band due to methylenic sequences (CH2 rocking vibration) after a proper digital subtraction of an isotactic polypropylene (IPP) reference spectrum. The range 660 to 790 cm-1 .

Elongation at yield: measured according to ISO 527.
Elongation at break: measured according to ISO 527
Stress at break: measured according to ISO 527.
IZOD Impact Strength
Determined according to IS0 18011A
Samples for the mechanical analysis
Samples have been obtained according to ISO 294-2
Flexural Modulus
Determined according to ISO 178.
Tensile modulus
Determined according to ISO 527
Samples for the mechanical analysis
Samples have been obtained according to ISO 1873-2:2007 excepting for the flexural modulus for which ISO 3167 has been used.

Polydispersity Index (PI): Determined at a temperature of 200°C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:

$$P.I.= 105/Gc$$

in which Gc is the crossover modulus which is defined as the value (expressed in Pa) at which G'=G" wherein G' is the storage modulus and G" is the loss modulus.

Component A)

Preparation of the solid catalyst component for component A)

Into a 2000 mL five-necked glass reactor, equipped with mechanical stirrer, jacket and a thermocouple, purged with nitrogen, 1000 mL of TiCl4 were introduced and the reactor cooled at -5°C. While stirring, 60.0 g of microspheroidal MgCl2·1.7C2H5OH having average particle size of 58μm (prepared in accordance with the method described in example 1 of EP728769) was added at -5°C. The temperature was raised at 40°C and an amount of diethyl 2,3-diisopropylsuccinate such as to have a Mg/succinate molar ratio of 13 was added. The temperature was raised to 100°C and kept at this value for 60 min. After that the stirring was stopped for 15 min and the solid settled down. The liquid was siphoned off. After siphoning, fresh TiCl4 and an amount of 9,9-bis(methoxymethyl)fluorene such to have a Mg/diether molar ratio of 26 was added. Then the temperature was raised to 110°C and kept for 30 minutes under stirring. The reactor was then cooled at 75°C and the stirrer was stopped for 15 min. After sedimentation and siphoning, fresh TiCl4 was added. Then the temperature was raised to 90°C and the suspension was stirred for 15min. The temperature was then decreased to 75°C and the stirrer was stopped, for 15 min. After sedimentation and siphoning at the solid was washed six times with anhydrous hexane (6 x 1000 ml) at 60 °C and one time with hexane at 25°C. The solid was dried in a rotavapor.

Preparation of the catalyst system for examples 1, 2 and comparative example 3

Before introducing it into the polymerization reactors, the solid catalyst component described above was contacted with aluminum-triethyl (TEAL) and dicyclopentyl-dimethoxysilane (DCPMS) at a temperature of 15°C.

Prepolymerization

The catalyst system was then subject to prepolymerization treatment at 20°C by maintaining it in suspension in liquid propylene for a residence time of 9 minutes before introducing it into the polymerization reactor.
The polymerization runs were conducted in continuous in a polymerisation apparatus as described in EP 1 012 195.
The catalyst is sent to the polymerisation apparatus that comprises two interconnected cylindrical reactors, riser and downcomer. Fast fluidisation conditions are established in the riser by recycling gas from the gas-solid separator. Hydrogen was used as molecular weight regulator. The polymerization conditions are reported on table 1.

Table 1

| **Component A)** | | |
|---|---|---|
| TEAL/external donor | wt/wt | 6 |
| TEAL/catalyst | wt/wt | 6 |
| Temperature | °C | 73 |
| Pressure | bar-g | 27 |
| Split holdup riser | wt% | 40 |
| downcorner | wt% | 60 |
| $C_3^-$ riser | mole% | 80 |
| | mole% | 1.3 |
| $H_2/C_3^-$ riser | mol/mol | 0.028 |
| $H_2/C_3^-$ downcomer | mol/mol | 0.016 |
| $C_3^-$ = propylene | | |

The properties of component A has been reported on table 2

Table 2

| Component A | | |
|---|---|---|
| MFR 5 Kg/230°C | g/10min | 1.3 |
| Polydispersity (PI) | | 6.2 |
| Xylene solubles at 25°C. | % | 2.7 |
| ISO Characterization after 7 days | | |
| Flexural modulus | MPa | 2050 |
| Tensile modulus | MPa | 1960 |
| IZOD 0°C | kJ/m2 | 4.3 |
| Stress at yield | % | 36 |
| Elongation at break | kJ/m2 | 28 |
| Tm | °C | 164 |

Component B)

Components B) is a commercial heterophasic polymer obtained by sequential gas phase polymerization, the features of the polymer are reported on table 3

Table 3

| Component | | B |
|---|---|---|
| Component b1 | | |
| Split | %wt | 30 |
| MFR 2.16 Kg/230°C | g/10min | 85 |
| Xylene solubles at 25°C | %wt | 2.0 |
| Component b2 | | |
| Split | %wt | 70 |
| C2 | %wt | 38.5 |
| intrinsic viscosity of the xylene soluble fraction at 25°C of the whole polymer | wt% | 2.7 |
| * C2= ethylene derived units | | |

Components A and B have been blended at various percentages. The properties of the resulting blends are reported on table 5 to be compared with the properties of comparative examples 2.

Table 4

| Blend | | 1 | 2 | Comp ex 3 |
|---|---|---|---|---|
| Component | | B | B | - |
| Split* | wt% | 2 | 4 | 0 |
| MFR 5 kg 230°C | g/10min | 1.2 | 1.5 | 1.3 |
| IZOD at 0° | kJ/m2 | 5.5 | 8 | 4.3 |

(continued)

| Blend | | 1 | 2 | Comp ex 3 |
|---|---|---|---|---|
| IZOD at -20° | kJ/m2 | 3.5 | 4 | 3.1 |
| | | | | |
| Flexural modulus | N/mm2 | 2100 | 2050 | 2050 |
| Crystalization temperature | % | 119.3 | 116.1 | 117.4 |
| Melting point | °C | 165.1 | 164.6 | 166 |
| *The remaining amount being component A. Comparative example 3 is component A alone | | | | |

From table 4 clearly result that the impact properties of the resulting blend are improved while the flexural modulus is substantially unchanged.

## Claims

**1.** A polyolefin composition comprising:

A) from 90.0 wt% to 99.0 wt%;of a propylene homopolymer having:

(i) polydispersity index ranging from 5 to 10
(ii) solubles in xylene at 25°C ranging from 4.0 wt% to 1.0 wt%;
(iii) the melt flow rate (230°C/5 kg.. ISO 1133) ranging from 0.2 g/lOmin to 3.5 g/lOmin;

B) from 1.0 wt% to 10.0 wt%; of a propylene, ethylene copolymer composition comprising:

b1) from 14 wt% to 52 wt%; of a propylene homopolymer or a propylene/ethylene copolymer having a content of ethylene derived units ranging from 0.1 wt% to 4.5 wt%; having a xylene soluble content measured at 25°C lower than 10 wt%; and a melt flow rate (230°C/2.16 kg. ISO 1133) ranging from 50 g/lOmin to 120 g/lOmin;
b2) from 48 wt% to 86 wt% of a propylene ethylene copolymer having a content of ethylene derived units ranging from 20.0 wt% to 55.0 wt%;

wherein the resulting polyolefin composition has an melt flow rate (230°C/5 kg.. ISO 1133) ranging from 0.2 g/lOmin to 4.0 g/lOmin; the sum of amounts of A+B being 100 and the sum of amounts of b1+b2 being 100.

**2.** The polyolefin composition according to claim 1 wherein component A) ranges from 98.5 to 95 wt% and component B) ranges from 1.5 wt% to 5.0. wt%.

**3.** The polyolefin composition according to claims 1 or 2 wherein in component B) b1) ranges from 22 wt% to 38 wt% and component b2) ranges from 62 wt% to 78 wt%.

**4.** The polyolefin composition according to anyone of claims 1-3 wherein the resulting polyolefin composition has an melt flow rate (230°C/5 kg.. ISO 1133) ranging from 0.5 g/10 min to 2 g/lOmin.

**5.** The polyolefin composition according to anyone of claims 1-4 wherein in the component B) component b1) is a propylene homopolymer.

**6.** The polyolefin composition according to anyone of claims 1-5 wherein in the component B) component b2) is preferably a propylene ethylene copolymer having an intrinsic viscosity of the xylene soluble fraction at 25°C ranging from 1.5 dl/g to 3.9 dl/g.

**7.** A pipe comprising the polyolefin composition of claims 1-6.

**8.** The pipe according to claim 7 being a sewage pipe.

## Patentansprüche

1. Polyolefinzusammensetzung, umfassend:

A) 90,0 Gew.% bis 99,0 Gew.% eines Propylenhomopolymers mit:

(i) einem Polydispersitätsindex im Bereich von 5 bis 10;
(ii) in Xylol bei 25 °C löslichem Material im Bereich von 4,0 Gew.% bis 1,0 Gew.%;
(iii) der Schmelzflussrate (230 °C/5 kg gemäß ISO 1133) im Bereich von 0,2 g/10 min bis 3,5 g/10 min;

B) 1,0 Gew.% bis 10,0 Gew.% einer Propylen-Ethylen-Copolymerzusammensetzung, umfassend:

b1) 14 Gew.% bis 52 Gew.% eines Propylenhomopolymers oder eines Propylen/Ethylen-Copolymers mit einem Gehalt an von Ethylen abgeleiteten Einheiten im Bereich von 0,1 Gew.% bis 4,5 Gew.%; mit einem bei 25 °C gemessenen Gehalt an in Xylol löslichem Material unter 10 Gew.%; und mit der Schmelzflussrate (230 °C/2,16 kg gemäß ISO 1133) im Bereich von 50 g/10 min bis 120 g/10 min;
b2) 48 Gew.% bis 86 Gew.% eines Propylen-Ethylen-Copolymers mit einem Gehalt an von Ethylen abgeleiteten Einheiten im Bereich von 20,0 Gew.% bis 55,0 Gew.%;

wobei die resultierende Polyolefinzusammensetzung eine Schmelzflussrate (230 °C/5 kg gemäß ISO 1133) im Bereich von 0,2 g/10 min bis 4,0 g/10 min hat; wobei die Summe aus A+B 100 ist und die Summe der Mengen von b1+b2 100 ist.

2. Polyolefinzusammensetzung nach Anspruch 1, wobei Komponente A) im Bereich von 98,5 Gew.% bis 95 Gew.% liegt und Komponente B) im Bereich von 1,5 Gew.% bis 5,0 Gew.% liegt.

3. Polyolefinzusammensetzung nach Anspruch 1 oder 2, wobei in Komponente B) b1) im Bereich von 22 Gew.% bis 38 Gew.% liegt und Komponente b2) im Bereich von 62 Gew.% bis 78 Gew.% liegt.

4. Polyolefinzusammensetzung nach einem der Ansprüche 1 bis 3, wobei die resultierende Polyolefinzusammensetzung eine Schmelzflussrate (230 °C/5 kg gemäß ISO 1133) im Bereich von 0,5 g/10 min bis 2 g/10 min hat.

5. Polyolefinzusammensetzung nach einem der Ansprüche 1 bis 4, wobei in der Komponente B) Komponente b1) ein Propylenhomopolymer ist.

6. Polyolefinzusammensetzung nach einem der Ansprüche 1 bis 5, wobei in der Komponente B) Komponente b2) vorzugsweise ein Propylen-Ethylen-Copolymer mit einer Grenzviskosität der in Xylol löslichen Fraktion bei 25 °C im Bereich von 1,5 dl/g bis 3,9 dl/g ist.

7. Rohr, das die Polyolefinzusammensetzung der Ansprüche 1 bis 6 umfasst.

8. Rohr nach Anspruch 7, das ein Abwasserrohr ist.

## Revendications

1. Composition de polyoléfine comprenant :

A) de 90,0 % en poids à 99,0 % en poids ; d'un homopolymère de propylène ayant :

(i) un indice de polydispersité se situant dans une plage allant de 5 à 10
(ii) des matières solubles dans le xylène à 25 °C se situant dans une plage allant de 4,0 % en poids à 1,0 % en poids ;
(iii) l'indice de fluidité à chaud (230 °C/5 kg. ISO 1133) se situant dans une plage allant de 0,2 g/10 min à 3,5 g/10 min ;

B) de 1,0 % en poids à 10,0 % en poids ; d'une composition de copolymère de propylène, d'éthylène comprenant :

b1) de 14 % en poids à 52 % en poids ; d'un homopolymère de propylène ou d'un copolymère de propylène/éthylène ayant une teneur en unités dérivées de l'éthylène se situant dans une plage allant de 0,1 % en poids à 4,5 % en poids ; ayant une teneur en matières solubles dans le xylène mesurée à 25 °C inférieure à 10 % en poids ; et un indice de fluidité à chaud (230 °C/2,16 kg.
ISO 1133) se situant dans une plage allant de 50 g/10 min à 120 g/10 min ;
b2) de 48 % en poids à 86 % en poids d'un copolymère de propylène-éthylène ayant une teneur en unités dérivées de l'éthylène se situant dans une plage allant de 20,0 % en poids à 55,0 % en poids ;

la composition de polyoléfine résultante ayant un indice de fluidité à chaud (230 °C/5 kg. ISO 1133) se situant dans une plage allant de 0,2 g/10 min à 4,0 g/10 min ; la somme des quantités de A+B étant de 100 et la somme des quantités de b1+b2 étant de 100.

**2.** Composition de polyoléfine selon la revendication 1 dans laquelle le composant A) se situe dans une plage allant de 98,5 à 95 % en poids et le composant B) se situe dans une plage allant de 1,5 % en poids à 5,0 % en poids.

**3.** Composition de polyoléfine selon les revendications 1 ou 2 dans laquelle, dans le composant B), b1) se situe dans une plage allant de 22 % en poids à 38 % en poids et le composant b2) se situe dans une plage allant de 62 % en poids à 78 % en poids.

**4.** Composition de polyoléfine selon l'une quelconque des revendications 1 à 3, la composition de polyoléfine résultante ayant un indice de fluidité à chaud (230 °C/5 kg. ISO 1133) se situant dans une plage allant de 0,5 g/10 min à 2 g/10 min.

**5.** Composition de polyoléfine selon l'une quelconque des revendications 1 à 4 dans laquelle, dans le composant B), le composant b1) est un homopolymère de propylène.

**6.** Composition de polyoléfine selon l'une quelconque des revendications 1 à 5 dans laquelle, dans le composant B), le composant b2) est de préférence un copolymère de propylène-éthylène ayant une viscosité intrinsèque de la fraction des matières solubles dans le xylène à 25 °C se situant dans une plage allant de 1,5 dl/g à 3,9 dl/g.

**7.** Tuyau comprenant la composition de polyoléfine des revendications 1 à 6.

**8.** Tuyau selon la revendication 7 qui est un tuyau d'égout.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9733117 A
- US 4399054 A
- EP 45977 A
- US 4472524 A
- EP 361493 A
- EP 728769 A
- EP 1012195 A